# EUROPEAN PATENT SPECIFICATION

(11) **EP 0 809 671 B1**
(45) Date of publication and mention of the grant of the patent: **21.10.1998**
(21) Application number: 96901765.6
(22) Date of filing: 18.01.1996
(51) Int. Cl.: C08J 9/00, C08J 9/14, C08G 18/32, C08G 18/38

(54) **PROCESS FOR THE PREPARATION OF RIGID POLYURETHANE FOAMS**
VERFAHREN ZUR HERSTELLUNG VON POLYURETHAN-HARTSCHAUMSTOFFEN
PROCEDE DE PREPARATION DES MOUSSES EN POLYURETHANNE RIGIDES

(30) Priority: 16.02.1995 EP 95200376
(43) Date of publication of application: 03.12.1997
(73) Proprietor: IMPERIAL CHEMICAL INDUSTRIES PLC, London SW1P 3JF (GB)
(72) Inventor: DE VOS, Rik, I-21100 Varese (IT); DAMS, Rudolf, J., B-2070 Zwijndrecht (BE)
(74) Representative: Swinnen, Anne-Marie
(86) International application number: EP9600303
(87) International publication number: WO9625455

(56) References cited:
- WO-A-94/23008
- US-A- 5 346 928

## Description

This invention relates to methods for the preparation of rigid polyurethane foams and especially to open celled rigid polyurethane foams, which can be used in evacuated insulation panels.

The production of foamed materials based on polyurethane and other polymer systems derived from organic polyisocyanates is well established. Depending upon the formulations used in their manufacture, the products can vary in texture from the soft flexible foams used as cushioning materials to the rigid foams used as insulating or structural materials.

Rigid polyurethane foams can be of the closed cell type or of the open cell type. An important application of open celled rigid polyurethane foam is as filler material in evacuated insulation panels as described in European Patent Publications Nos 188806 and 498628.

In European Patent Publication No. 498628 (incorporated herein by reference) a process for preparing open celled rigid polyurethane foam is described, said process comprising the step of reacting an organic polyisocyanate with an isocyanate-reactive material in the presence of a blowing promotor being an isocyanate-reactive cyclic compound of formula: 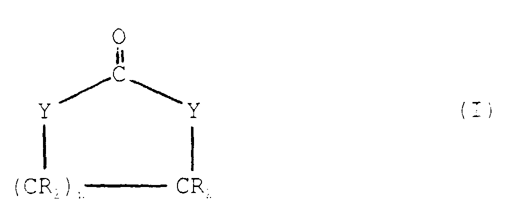 wherein
Y is O or NR¹ wherein each R¹ independently is a lower alkyl radical of C₁-C₆ or a lower alkyl radical substituted with an isocyanate-reactive group;
each R independently is hydrogen, a lower alkyl radical of C₁-C₆ or (CH₂)ₘ-X wherein X is an isocyanate-reactive group which is OH or NH₂ and m is 0, 1 or 2; and
n is 1 or 2;
with the proviso that at least one of R¹ or R is or comprises an isocyanate-reactive group;
and in the presence of an inert insoluble organic liquid which is present as the dispersed phase of an emulsion or a microemulsion and in the presence of a metal salt catalyst.

Preferred compounds to be used as inert insoluble organic liquid are described in EP-A-498628 as highly fluorinated or perfluorinated compounds including fluorinated hydrocarbons such as fluorinated (cyclo)alkanes, fluorinated ethers, fluorinated amines, fluorinated hydroxyl amines, fluorinated amino-ethers and fluorinated sulfones.

A disadvantage of the fluorinated compounds listed in EP-A-498628 is their global warming potential due to their relatively long atmospheric lifetime.

Therefore it is an object of the present invention to improve said process for preparing open celled rigid polyurethane foam in respect of the type of fluorinated compound used, in particular in respect of its global warming potential.

Accordingly the present invention provides a process for the preparation of open celled rigid polyurethane foams comprising the step of reacting an organic polyisocyanate with an isocyanate-reactive material in the presence of a blowing promotor being an isocyanate-reactive cyclic compound of formula: 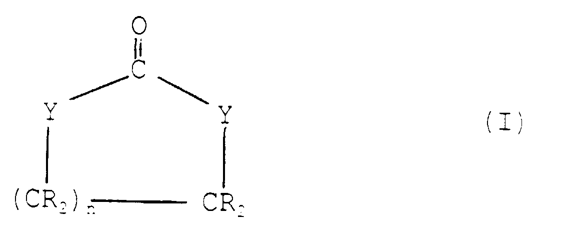 wherein
Y is O or NR¹ wherein each R¹ independently is a lower alkyl radical of C₁-C₆ or the lower alkyl radical substituted with an isocyanate-reactive group;
each R independently is hydrogen, a lower alkyl radical of C₁-C₆ or (CH₂)ₘ-X wherein X is an isocyanate-reactive group which is OH or NH₂ and m is 0, 1 or 2; and
n is 1 or 2;
with the proviso that at least one of R¹ or R is or comprises an isocyanate-reactive group;
and in the presence of from 0.05 to 5% by weight based on the total reaction system of an insoluble fluorinated organic liquid which is present as the dispersed phase of an emulsion or a microemulsion and in the presence of a metal salt catalyst, characterised in that said insoluble fluorinated organic liquid comprises a perfluorinated acyclic unsaturated organic compound.

The perfluorinated acyclic unsaturated organic compound to be used in the process of the present invention has a shorter atmospheric lifetime than the fluorinated compounds described in EP-A-498628, and thus a lower global warming potential.
Further their use does not lead to inferior end products.
Thus the present invention provides a more environmentally friendly process for preparing open celled rigid polyurethane foam.

The perfluorinated acyclic unsaturated organic compounds to be used in the present process are normally liquid perfluoroolefin compounds. These compounds may contain some residual carbon-bonded hydrogen (generally less than about 0.4 mg/g and preferably less than about 0.1 mg/g) but are preferably completely fluorinated. The perfluoroolefin compound can contain one or more catenary heteroatoms, e.g., nitrogen or oxygen atoms. Representative examples of suitable perfluorinated acyclic unsaturated compounds include hexafluoropropene dimers, e.g., perfluoro(4-methylpent-2-ene) and perfluoro(2-methylpent-2-ene); hexafluoropropene trimers, e.g., perfluoro(4-methyl-3-isopropyl-2-ene) and perfluoro(2,4-dimethyl-3-ethylpent-2-ene); tetrafluoroethylene oligomers, e.g., perfluoro(3-methylpent-2-ene), perfluoro(3,4-dimethylhex-3-ene), and perfluoro(2,4-dimethyl-4-ethylhex-2-ene) ; perfluoro(1-pentene); perfluoro(2-pentene); perfluoro(1-hexene); perfluoro(1-heptene); perfluoro(2-heptene); perfluoro (3-heptene); perfluoro(oxaalkenes), e.g., perfluoro(3-oxahex-1-ene), perfluoro(3-oxahept-1-ene), and perfluoro(3-oxa-4-methylpent-1-ene); perfluoro(3-ethyl-3-azapent-1-ene); and mixtures thereof. Perfluoro(4-methylpent-2-ene) is most preferred.

For use in the process of the invention, the perfluorinated acyclic unsaturated compounds preferably have boiling points greater than or equal to about 20°C. More preferably, the compounds have boiling points in the range of from about 45°C to about 125°C.

Perfluoroolefin compounds (as well as catenary heteroatom-containing perfluoroolefin compounds) can be prepared by methods such as the decarboxylation of salts of fluorocarboxylic acids (see, e.g., A.M. Lovelace, D.A. Rausch, and W. Postelnek, "Aliphatic Fluorine Compounds", Chapter III, Reinhold Publishing Corporation, New York (1958)) and the coupling of two or more perfluoroolefins (as described, e.g., in US-P-5,220,082). Hexafluoropropene oligomers can be prepared by various gas-phase and liquid-phase methods such as those described in, e.g., US-P-5,254,774. Hexafluoropropene trimers are also commercially available (e.g., from Fluorochem Limited). Tetrafluoroethylene oligomers can be prepared by methods such as those described in, e.g., US-P-3,758,618 and 4,016,217.

In the process of the present invention one or more of said perfluorinated acyclic unsaturated compounds can be used. Further the perfluorinated acyclic unsaturated compound(s) can also be used in combination with other fluorinated compounds. Representative examples of such other fluorinated compounds are given in EP-A-498628.

The total amount of insoluble fluorinated organic compounds to be used in the process of the present invention, including the perfluorinated acyclic unsaturated compound(s) ranges from 0.05 to 5 % by weight based on the total reaction system.

The insolubility of the fluorinated organic liquid in the reaction mixture usually arises from the fact that it is insoluble in one or more of the major ingredients of the foam formulation, especially the isocyanate-reactive material and/or the polyisocyanate.
Solubility in these materials can be determined by conventional techniques.

The insoluble fluorinated organic compound(s) will usually be incorporated in the foam-forming reaction mixture in the form of an emulsion or preferably a microemulsion in one of the major components, that is to say in the isocyanate-reactive component and/or the polyisocyanate component. Such emulsions or microemulsions may be prepared using conventional techniques and suitable emulsifying agents.

Emulsifying agents suitable for preparing stable emulsions or microemulsions of fluorinated liquid compounds in organic polyisocyanates and/or isocyanate-reactive compounds include surfactants chosen from the group of nonionic, ionic (anionic or cationic) and amphoteric surfactants. Preferred surfactants for emulsifying the fluorinated liquid compound in the isocyanate-reactive composition are silicone surfactants, fluoro surfactants and/or alkoxylated alkanes. Particular examples of fluoro surfactants include fluorinated alkyl polyoxyethylene ethanols, fluorinated alkyl alkoxylates and fluorinated alkyl esters. Preferred surfactants for emulsifying the fluorinated liquid compound in the polyisocyanate composition are non-isocyanate-reactive silicone surfactants such as Tegostab B 8407 available from Goldschmidt and SR 234 available from Union Carbide.

A preferred compound of formula (I) to be used in the process of the present invention, wherein Y is O is an isocyanate-reactive cyclic carbonate which is glycerol carbonate.

Preferred compounds of formula (I) wherein Y is NR¹ are isocyanate-reactive cyclic ureas of formula: 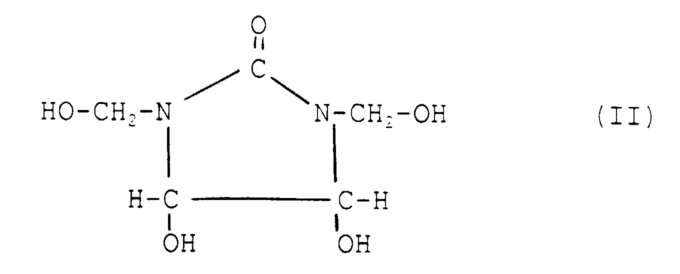 and

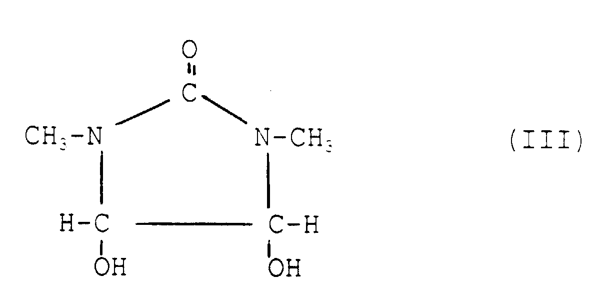

The isocyanate-reactive cyclic blowing promotor is used in amounts ranging from 1 to 99 %, preferably from 1 to 60 % by weight based on the total isocyanate-reactive material.

Suitable further blowing agents may be used in the method of the present invention such as water or inert low boiling compounds having a boiling point of above -50°C at 1 bar.

The amount of water used as blowing agent may be selected in known manner to provide foams of the desired density, typical amounts being in the range from 0.05 to 5 parts by weight per 100 parts by weight of reactive ingredients, although it may be a particular embodiment of the present invention to incorporate up to 10 % by weight or even up to 20 % by weight of water.

Suitable inert blowing agents include, for example, hydrocarbons, dialkyl ethers, alkyl alkanoates, aliphatic and cycloaliphatic hydrofluorocarbons, hydrochlorofluorocarbons, chlorofluorocarbons and fluorine-containing ethers. Suitable hydrocarbon blowing agents include lower aliphatic or cyclic hydrocarbons such as n-pentane, isopentane, cyclopentane, neopentane, hexane and cyclohexane.

Preferred metal salt catalysts for use in the present invention are those selected among group Ia and group IIa metal salts, more preferably among group Ia and group IIa metal carboxylates.

Particularly suitable catalysts for use in the present invention are potassium acetate and potassium ethylhexoate.

The metal salt catalyst is used in the process of the present invention in amounts ranging from 0.01 to 3 % by weight based on the total reaction system.

Organic polyisocyanates which may be used in the method of the present invention include aliphatic, cycloaliphatic, araliphatic and aromatic polyisocyanates but especially the polyisocyanates proposed in literature for use in the production of foams. Of particular importance are aromatic diisocyanates such as tolylene and diphenylmethane diisocyanate in the well known pure, modified or crude forms. Special mention may be made of the so-called MDI variants (diphenylmethane diisocyanate modified by the introduction of urethane, allophanate, urea, biuret, carbodiimide, uretonimine or isocyanurate residues) and the mixtures of diphenylmethane diisocyanate(s) and oligomers thereof known in the art as "crude" or "polymeric" MDI (polymethylene polyphenylene polyisocyanates).

In performing the method of the invention the polyisocyanate may be reacted with the isocyanate-reactive cyclic carbonate or isocyanate-reactive cyclic urea in the absence or presence of other isocyanate-reactive materials. It is preferred, however, to perform the method of the invention in the presence of other isocyanate-reactive materials.

Suitable isocyanate-reactive materials generally include polyols, amines, imines and enamines and mixtures thereof.
For the preparation of rigid polyurethane foams, suitable isocyanate-reactive compounds, especially polyols, in general have a molecular weight of 62 to 1500 and a functionality of 2 to 8, especially 3 to 8. Polymeric polyols have been fully described in the prior art and include reaction products of alkylene oxides, for example ethylene oxide and/or propylene oxide, with initiators containing from 2 to 8 active hydrogen atoms per molecule. Suitable initiators include polyols, for example, glycerol, trimethylolpropane, triethanolamine, pentaerythritol, sorbitol and sucrose, and polyamines, for example ethylenediamine, tolylene diamine, diaminodiphenylmethane and polymethylene polyphenylene polyamines, and aminoalcohols, for example, ethanolamine, diethanolamine and triethanolamine, and mixtures of such initiators. Other suitable polyols for use in the process of the present invention include polyesters obtained by the condensation of appropriate proportions of glycols and higher functionality polyols with dicarboxylic acids. Still further suitable polyols include hydrosilyl terminated polythioethers, polyamides, polyesteramides, polycarbonates, polyacetals, polyolefins and polysiloxanes.

In addition to the ingredients already mentioned the foam-forming mixture may contain one or more other auxiliaries or additives conventional to isocyanate-based foam formulations. Such optional additives include further conventional catalysts, fire retardants, smoke suppressants, organic or inorganic fillers, thixotropic agents, dyes, pigments, mould release agents, surfactants, and foam stabilisers.

Isocyanate indices of from 70 to 140 will typically be used in operating the method of the present invention but lower indices may be used if desired. Higher indices, for example 150 to 500 or even up to 3000, may be used in conjunction with trimerisation catalysts to make foams containing isocyanurate linkages.

To reduce the number of component streams delivered to the final mixing apparatus, the cyclic isocyanate-reactive blowing promotor, the catalyst, the insoluble fluorinated organic compound(s) and optionally other additives may be premixed with one of the major components of the foam formulation, in general with the isocyanate-reactive component.

Therefore the present invention also provides an isocyanate-reactive composition comprising a blowing promotor being an isocyanate-reactive cyclic compound of formula: 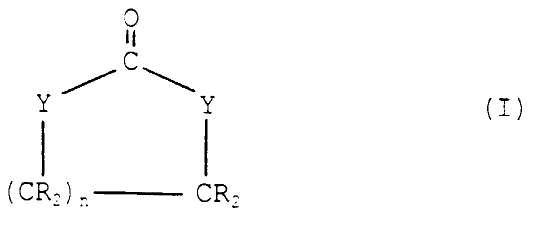 wherein
Y is O or NR¹ wherein each R¹ independently is a lower alkyl radical of C₁-C₆ or the lower alkyl radical substituted with an isocyanate-reactive group;
each R independently is hydrogen, a lower alkyl radical of C₁-C₆ or (CH₂)ₘ-X wherein X is an isocyanate-reactive group which is OH or NH₂ and m is 0, 1 or 2; and
n is 1 or 2;
with the proviso that at least one of R¹ or R is or comprises an isocyanate-reactive group;
from 0.05 to 5% by weight based on the total reaction system of an insoluble fluorinated organic liquid which is present as the dispersed phase of an emulsion or a microemulsion and a metal salt catalyst, characterised in that said insoluble fluorinated organic liquid comprises a perfluorinated acyclic unsaturated organic compound.

The method of the present invention may be put into practice making use of conventional techniques. Thus known mixing methods may be used and the foams may be produced in the form of slabstock, mouldings, cavity fillings, sprayed foam, frothed foam or laminates with other materials such as hardboard, plasterboard, paper, plastics or metal.

The rigid polyurethane foams prepared in accordance with the method of the invention are of particular use for evacuated insulation panel applications.

Evacuated insulation panels generally comprise a low thermal conductivity filler material (such as open celled polyurethane foam) and a vessel formed of a gastight film enveloping said filler, the whole being evacuated to an internal pressure of about 5 mbar or less and then hermetically sealed.

General descriptions of the construction of evacuated insulation panels and their use in thermal devices can be found in US Patents Nos 5,066,437, 5,032,439 and 5,076, 984 and European Patent Publications Nos 434266, 434225 and 181778.

The invention is illustrated but not limited by the following example.

### Example

The following ingredients were used:
Polyol A being a polyether polyol composition of average hydroxyl value 365 mg KOH/g and average functionality 2.9;
Tegostab B 8406 being a silicone surfactant available from Goldschmidt;
Catalyst LB being a metal salt catalyst available from Imperial Chemical Industries PLC;
Fixapret NF being a cyclic urea available from BASF; perfluorohexane (PFH);
perfluoro(4-methylpent-2-ene) (PFO) available from 3M under the tradename L 12596;
SUPRASEC 2185 being a polymeric MDI available from Imperial Chemical Industries PLC.
SUPRASEC is a trademark of Imperial Chemical Industries.

Rigid foams were prepared on a commercial laminator at 30kg/min application rate using the formulations (amounts are given in parts by weight) as listed in Table 1. Some foam properties are also given in Table 1: isocyanate index, density expressed in kg/m³, closed cell content (CCC) given in % and cell size given in microns. Density (core density) was measured according to DIN 53420 standard. Closed cell content was measured according to BS 4370 Method 10 standard and represents volume % of closed cells. Cell size was measured according to the method described by A. Cunningham in "Proceedings of Conference on Heat and Mass Transfer in Cryoengineering and Refrigeration", September 1986, page 32-49.

Blocks of foams were heat treated for 10 minutes at 150°C, pumped down to 0.05 mbar pressure and heat sealed in a metalised film. The initial thermal conductivity (lambda value expressed in mW/mK) was measured according to standard ISO 2581. Results are also given in Table 1.

**Table 1**

| | Comparative foam | Foam acc.to invention |
|---|---|---|
| Formulation | | |
| Polyol A | 100.3 | 100.3 |
| Catalyst LB | 0.1 | 0.1 |
| B 8406 | 4 | 4 |
| Fixapret NF | 1.6 | 1.6 |
| SUPRASEC 2185 | 154 | 154 |
| water | 0.25 | 0.25 |
| PFH | 4 | - |
| PFO | - | 4 |

| Foam properties | | |
|---|---|---|
| Isocyanate Index | 140 | 140 |
| Density | 58.1 | 58.7 |
| Closed cell content | 0.6 | 0.7 |
| Cell size | 170 | 170 |
| Lambda initial | 7.5 | 7.0 |

These results show that by using a more environmentally friendly perfluorinated acyclic unsaturated compound the foam properties are not detrimentally influenced.

## Claims

1. Process for the preparation of rigid foams comprising the step of reacting an organic polyisocyanate with an isocyanate-reactive material in the presence of a blowing promotor being an isocyanate-reactive cyclic compound of formula: 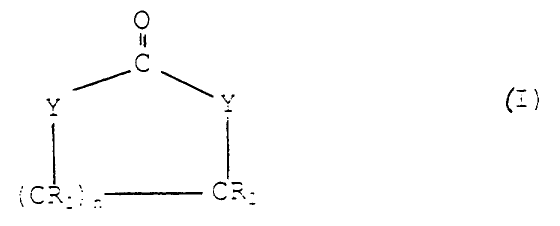 wherein
Y is O or NR¹ wherein each R¹ independently is a lower alkyl radical of C₁-C₆ or the lower alkyl radical substituted with an isocyanate-reactive group;
each R independently is hydrogen, a lower alkyl radical of C₁-C₆ or (CH₂)ₘ-X wherein X is an isocyanate-reactive group which is OH or NH₂ and
m is 0, 1 or 2; and
n is 1 or 2
with the proviso that at least one of R¹ or R is or comprises an isocyanate-reactive groups;
and in the presence of from 0.05 to 5 % by weight based on the total reaction system of an insoluble fluorinated organic liquid which is present as the dispersed phase of an emulsion or a microemulsion and in the presence of a metal salt catalyst characterised in that said insoluble fluorinated organic liquid comprises a perfluorinated acyclic unsaturated organic compound.

2. Process according to claim 1 wherein the perfluorinated acyclic unsaturated organic compound comprises perfluoro(4-methylpent-2-ene).

3. Process according to any one of the preceding claims wherein the isocyanate-reactive cyclic blowing promoter is a cyclic urea of formula 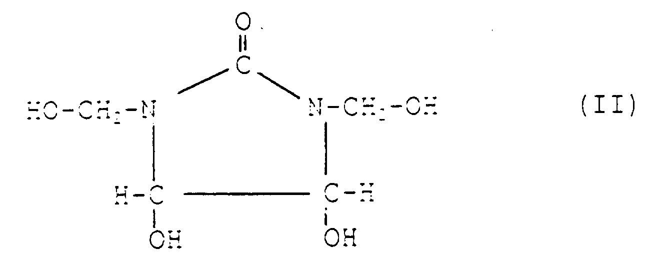 or

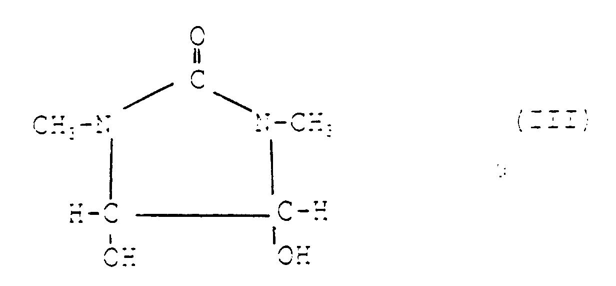

4. Process according toany one of the preceding claims wherein the isocyanate-reactive cyclic blowing promotor is used in amounts ranging from 1 to 99 % by weight based on the total isocyanate-reactive material.

5. Process according to any one of the preceding claims wherein the metal salt catalyst is a group Ia or group IIa metal carboxylate.

6. Process according to any one of the preceding claims wherein the metal salt catalyst is used in amounts ranging from 0.01 to 3 % by weight based on the total reaction system.

7. Isocyanate-reactive composition comprising a blowing promoter being an isocyanate-reactive cyclic compound of formula: 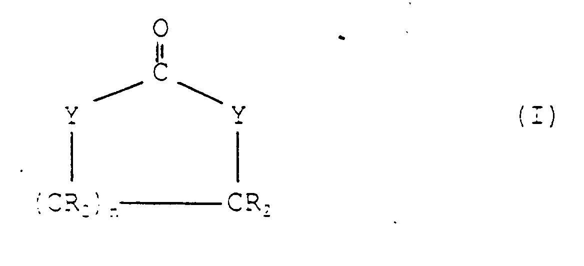 wherein
Y is O or NR¹ wherein each R¹ independently is a lower alkyl radical of C₁-C₆ or the lower alkyl radical substituted with an isocyanate-reactive group;
each R independently is hydrogen, a lower alkyl radical of C₁-C₆ or (CH₂)ₘ-X wherein X is an isocyanate-reactive group which is OH or NH₂ and
m is 0, 1 or 2; and
n is 1 or 2;
with the proviso that at least one of R¹ or R is or comprises an isocyanate-reactive group;
from 0.05 to 5 % by weight based on the total reaction system of an insoluble fluorinated organic liquid which is present as the dispersed phase of an emulsion or a microemulsion and a metal salt catalyst, characterised in that said insoluble fluorinated organic liquid comprises a perfluorinated acyclic unsaturated organic compound.

## Patentansprüche

1. Verfahren zur Herstellung von Hartschaumstoffen, das den Schritt der Umsetzung eines organischen Polyisocyanats mit einem isocyanat-reaktiven Material in Gegenwart eines schäumungsfördernden Mittels, das eine isocyanat-reaktive, cyclische Verbindung mit der nachstehenden Formel ist: 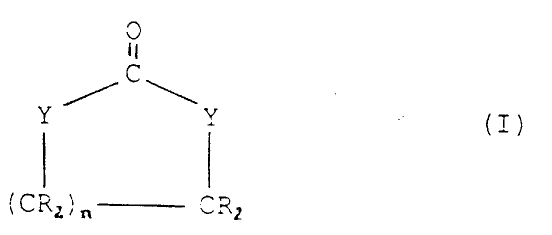
worin Y O oder NR¹ ist, wobei jedes R¹ unabhängig eine Niederalkylgruppe aus C₁ bis C₆ oder die mit einer isocyanat-reaktiven Gruppe substituierte Niederalkylgruppe ist;
wobei jedes R unabhängig ein Wasserstoffatom, eine Niederalkylgruppe aus C₁ bis C₆ oder (CH₂)ₘ-X ist, wobei X eine isocyanat-reaktive Gruppe ist, die aus OH oder NH₂ besteht, und
m 0, 1 oder 2 ist; und
n 1 oder 2 ist;
unter der Bedingung, daß mindestens eine der Gruppen, R¹ oder R, eine isocyanat-reaktive Gruppe ist oder eine isocyanat-reaktive Gruppe umfaßt;
und in Gegenwart von 0,05 bis 5 Gewichts-%, bezogen auf das gesamte Reaktionssystem, einer unlöslichen, fluorierten, organischen Flüssigkeit, die als die dispergierte Phase einer Emulsion oder einer Mikroemulsion zugegen ist, und in Gegenwart eines Metallsalzkatalysators umfaßt,
**dadurch gekennzeichnet, daß**
die unlösliche, fluorierte, organische Flüssigkeit eine perfluorierte, acyclische, ungesättigte, organische Verbindung umfaßt.

2. Verfahren nach Anspruch 1,
**dadurch gekennzeichnet, daß**
die perfluorierte, acyclische, ungesättigte, organische Verbindung Perfluor(4-methylpent-2-en) umfaßt.

3. Verfahren nach einem der vorstehenden Ansprüche,
**dadurch gekennzeichnet, daß**
das isocyanat-reaktive, cyclische schäumungsfördernde Mittel ein cyclischer Harnstoff mit der nachstehenden Formel ist: 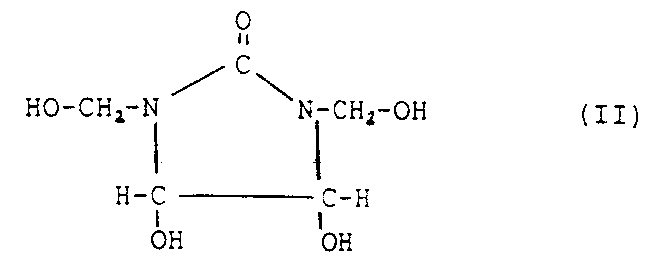 oder

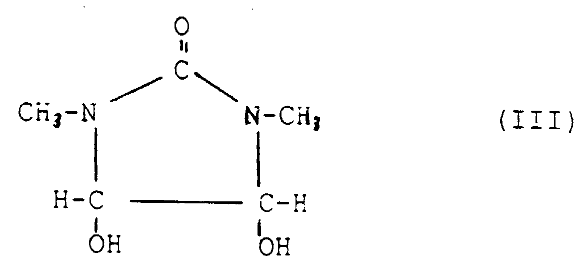

4. Verfahren nach einem der vorstehenden Ansprüche,
**dadurch gekennzeichnet, daß**
das isocyanat-reaktive, cyclische schäumungsfördernde Mittel in Mengen im Bereich von 1 Gewichts-% bis 99 Gewichts-%, bezogen auf das gesamte isocyanat-reaktive Material, verwendet wird.

5. Verfahren nach einem der vorstehenden Ansprüche,
**dadurch gekennzeichnet, daß**
der Metallsalzkatalysator ein Carboxylat eines Metalls der Gruppe Ia oder der Gruppe IIa ist.

6. Verfahren nach einem der vorstehenden Ansprüche,
**dadurch gekennzeichnet, daß**
der Metallsalzkatalysator in Mengen im Bereich von 0,01 Gewichts-% bis 3 Gewichts-%, bezogen auf das gesamte Reaktionssystem, verwendet wird.

7. Isocyanat-reaktive Zusammensetzung, die ein schäumungsförderndes Mittel, das eine isocyanat-reaktive, cyclische Verbindung mit der nachstehenden Formel ist: 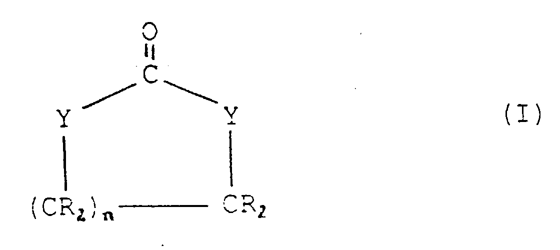
worin Y O oder NR¹ ist, wobei jedes R¹ unabhängig eine Niederalkylgruppe aus C₁ bis C₆ oder die mit einer isocyanat-reaktiven Gruppe substituierte Niederalkylgruppe ist;
wobei jedes R unabhängig ein Wasserstoffatom, eine Niederalkylgruppe aus C₁ bis C₆ oder (CH₂)ₘ-X ist, wobei X eine isocyanat-reaktive Gruppe ist, die aus OH oder NH₂ besteht, und
m 0, 1 oder 2 ist; und
n 1 oder 2 ist;
unter der Bedingung, daß mindestens eine der Gruppen, R¹ oder R, eine isocyanat-reaktive Gruppe ist oder eine isocyanat-reaktive Gruppe umfaßt;
und 0,05 bis 5 Gewichts-%, bezogen auf das gesamte Reaktionssystem, einer unlöslichen, fluorierten, organischen Flüssigkeit, die als die dispergierte Phase einer Emulsion oder einer Mikroemulsion zugegen ist, und einen Metallsalzkatalysators umfaßt,
**dadurch gekennzeichnet, daß**
die unlösliche, fluorierte, organische Flüssigkeit eine perfluorierte, acyclische, ungesättigte, organische Verbindung umfaßt.

## Revendications

1. Procédé de production de mousses rigides, qui comprend l'étape consistant à faire réagir un polyisocyanate organique avec une matière réactive vis-à-vis d'un isocyanate en présence d'un promoteur porogène qui est un composé cyclique réactif vis-à-vis d'un isocyanate, de formule : 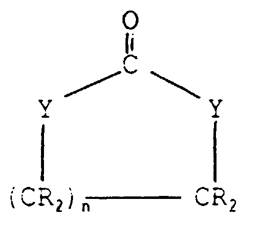 dans laquelle
Y représente O, ou un groupe NR¹ dans lequel chaque R¹ représente indépendamment un radical alkyle inférieur en C₁ à C₄ ou le radical alkyle inférieur substitué avec un groupe réactif vis-à-vis d'un isocyanate ;
chaque R représente indépendamment l'hydrogène, un radical alkyle inférieur en C₁ à C₄ ou un radical (CH₂)ₘ-X dans lequel X est un groupe réctif vis-à-vis d'un isocyanate qui est un groupe OH ou NH₂ et
m a la valeur 0, 1 ou 2 ; et
n est égal à 1 ou 2 ;
sous réserve qu'au moins l'un de R¹ et R soit ou comprenne un groupe réactif vis-à-vis d'un isocyanate,
et en présence de 0,05 à 5 % en poids, sur la base du système réactionnel total, d'un liquide organique fluoré insoluble qui est présent comme phase dispersée d'une émulsion ou d'une micro-émulsion et en présence d'un catalyseur formé d'un sel métallique, caractérisé en ce que le liquide organique fluoré insoluble comprend un composé organique non saturé acyclique perfluoré.

2. Procédé suivant la revendication 1, dans lequel le composé organique non saturé acyclique perfluoré comprend le perfluoro(4-méthylpent-2-ène).

3. Procédé suivant l'une quelconque des revendications précédentes, dans lequel le promoteur porogène cyclique réactif vis-à-vis d'un isocyanate est une urée cyclique de formule 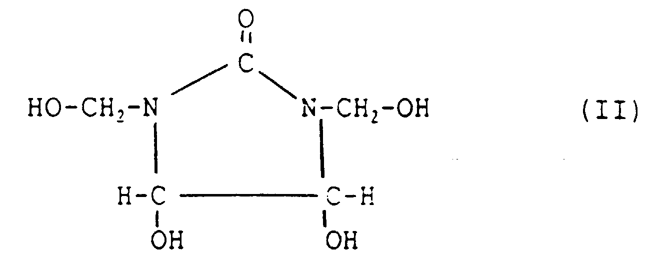 ou

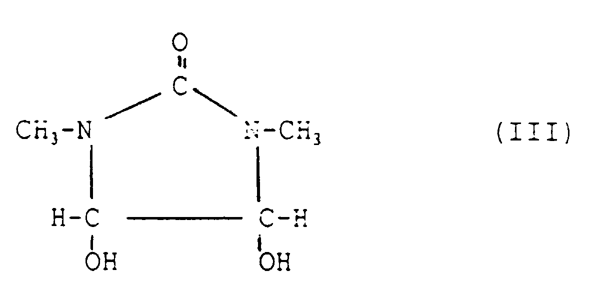

4. Procédé suivant l'une quelconque des revendications précédentes, dans lequel le promoteur porogène cyclique réactif vis-à-vis d'un isocyanate est utilisé en quantités allant de 1 à 99 % en poids sur la base du total de la matière réactive vis-à-vis d'un isocyanate.

5. Procédé suivant l'une quelconque des revendications précédentes, dans lequel le catalyseur formé du sel métallique est un carboxylate de métal du Groupe Ia ou du Groupe IIa.

6. Procédé suivant l'une quelconque des revendications précédentes, dans lequel le catalyseur formé d'un sel métallique est utilisé en quantités allant de 0,01 à 3 % en poids sur la base du système réactionnel total.

7. Composition réactive vis-à-vis d'un isocyanate, comprenant un promoteur porogène qui est un composé cyclique réactif vis-à-vis d'un isocyanate, de formule : 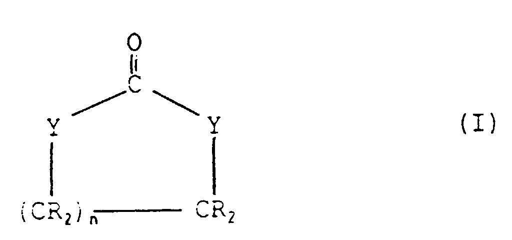 dans laquelle
Y représente O, ou un groupe NR¹ dans lequel chaque R¹ représente indépendamment un radical alkyle inférieur en C₁ à C₄ ou le radical alkyle inférieur substitué avec un groupe réactif vis-à-vis d'un isocyanate ;
chaque R représente indépendamment l'hydrogène, un radical alkyle inférieur en C₁ à C₄ ou un radical (CH₂)ₘ-X dans lequel X est un groupe réactif vis-à-vis d'un isocyanate qui est un groupe OH ou NH₂ et
m a la valeur 0, 1 ou 2 ; et
n est égal à 1 ou 2 ;
sous réserve qu'au moins l'un de R¹ et R soit ou comprenne un groupe réactif vis-à-vis d'un isocyanate,
et en présence de 0,05 à 5 % en poids, sur la base du système réactionnel total, d'un liquide organique fluoré insoluble qui est présent comme phase dispersée d'une émulsion ou d'une micro-émulsion et en présence d'un catalyseur formé d'un sel métallique, caractérisé en ce que le liquide organique fluoré insoluble comprend un composé organique non saturé acyclique perfluoré.
